# EUROPEAN PATENT SPECIFICATION

(11) **EP 2 609 378 B1**
(45) Date of publication and mention of the grant of the patent: **16.12.2015**
(21) Application number: 11761706.8
(22) Date of filing: 09.08.2011
(51) Int. Cl.: F24J 2/14, F24J 2/07, F24J 2/54

(54) **SUPPORT STRUCTURE FOR A PARABOLIC-LINEAR SOLAR PLANT OF THE CONCENTRATION TYPE AND METHOD FOR ITS MANUFACTURE**
STÜTZSTRUKTUR FÜR EINEN PARABOLISCHEN LINEAREN SOLARKONZENTRATOR UND VERFAHREN ZU IHRER HERSTELLUNG
STRUCTURE DE SUPPORT POUR UNE CENTRALE SOLAIRE PARABOLIQUE-LINÉAIRE DU TYPE À CONCENTRATION ET PROCÉDÉ POUR SA FABRICATION

(30) Priority: 27.08.2010 IT UD20100160
(43) Date of publication of application: 03.07.2013
(73) Proprietor: Agenzia Nazionale Per Le Nuove Tecnologie, L'Energia E Lo Sviluppo Economico Sostenibile (ENEA), 00196 Roma (RM) (IT); D.D. SRL, 33036 Mereto di Tomba (IT)
(72) Inventor: ZULIANI, Gianfranco, I-33031 Basiliano UD (IT); DURI', Giordano, I-33036 Mereto di Tomba UD (IT); DE CILLIA, Luigi, I-33036 Mereto di Tomba UD (IT); MILIOZZI, Adio, I-05100 Terni TR (IT); NICOLINI, Daniele, I-00060 Formello RM (IT)
(74) Representative: Papa, Elisabetta
(86) International application number: PCT/IB2011/053549
(87) International publication number: WO 2012/025849

(56) References cited:
- EP-A1- 1 947 403
- WO-A2-2010/055397
- DE-U1-202010 001 474
- US-A- 4 432 343

## Description

### TECHICAL FIELD

The present invention refers to a supporting structure, and method for producing the same, for a parabolic-linear solar plant of the concentration type for producing energy, in particular a structrure apt to supportingparabolic mirrors to concentrate sun's rays on a receiver member, such as a receiver pipe, or tube placed around the focus of said mirrors, wherein the passage of a fluid to be heated is provided, or, in subsitiution or in combination to said receiver tube, photovoltaic cells of concentration type.

### BACKGROUND

It is known that current parabolic-linear solar plant of the concentration type, for example as described in European patent EP-B-1397621, are generally formed by reflecting surfaces with curved mirrors, having parabolic shape, with focus placed at a certain distance, depending on the extent of the associated parabola.

These mirrors are supported by a structure formed by a supporting shaft on which the mirrors are pivoted, as well as supporting centrings placed transversely on both sides of the supporting shaft and longitudinal currents, which develop in parallel to said supporting shaft.

The focuses of said mirrors are aligned along a common axis and, along this axis, a receiver member is placed, such as a receiver pipe or tube, in which a thermovector fluid flows which is heated by sun's rays concentrated by said mirrors, for energy production, or, in substitution or in combination to said receiver tube, photovoltaic cells of concentration type.

Supporting arms are provided that elongate from the supporting shaft for the positioning of the receiver member, for example the receiver tube and/or said photovoltaic cells along said focus alignment axis.

The reciprocal correct positioning of the mirrors and receiver member with respect to the focus alignment axis of the mirrors is extremely important for an efficient working of the parabolic-linear solar plant of the concentration type.

Normally, the accuracy of this reciprocal positioning between the mirrors and the receiver member is obtained, during the mounting phase of the plant, through lengthy and complex manual adjustments of the position of the mirrors and the supporting arms.

Moreover, even if the supporting structure, typically in carpentry, is performed by seeking a sufficient precision of both processing and reciprocal positioning of the respective components, the chemical processes of protection corrosion, typically galvanization, which are usually carried out after the construction in carpentry of the structure, can induce internal stresses in the building material, deforming the material and eroding, therefore, the correct positioning.

An undesirable deformation of the currents, for example, can lead to twisting of the structure that combined with the strong thermal expansions or torsions due to wind pressure, may also damage the mirrors, until the breaking.

Thus, there is the need for a manual adjustment during installation on yard. In particular, each centring which supports the mirrors has one concave end, shaped substantially like a "C", which is coupled to the central shaft and the regulation provides, once that mirrors are installed on centrings pivoted on the shaft, to adjust the angular position of a first mirror and of the respective centring with respect to the focus of the mirror itself and, on the basis of previous adjustments of the mirrors, therefore, carrying adjustments progressively different on all subsequent mirrors and centrings, with evident burden in terms of time and costs.

In fact, that adjustment is empirical, at the mounter's discretion, is not repeatable and varied, as mentioned, for each rib, with a need, therefore, of reciprocal re-positioning of the centrings as adjustment continues. In addition, there is a need to repeat the adjustment in case of a component replacement.

The same applies to the supporting arms of the receiver member that, through appropriate articulation, should allow a wide linear expansion of the receiver member itself, but should also ensure a very little or a null angular variation, to achieve and maintain the maximum focus accuracy. In this case, like the ribs, the adjustment in yard is complex and requires multiple corrections over the time, due to higher temperatures to which the receiver member is subjected and caused by the wear of adjustment mechanism and consequently gaps.

One aim of the present invention is to carry out a supporting structure, and to develop a respective method for producing the same, which allows a precise, quick and economical, in terms of time and costs, adjustment of the angular position of the mirrors, and respective ribs, with respect to the associated focus.

Another aim of the present invention is to carry out a supporting structure, and a respective method for producing the same, in which, in the case of thermal expansions or twisting due to wind pressure, even higher, there is not the appearance of excessive internal stresses and consequent breakage of mirrors.

A further aim is to obtain a supporting structure, and a respective method for producing the same, which allows a precise, quick and economical, in terms of time and costs, adjustment of the angular position of the receiver member, and respective supporting arms, and its positional stability over the time in its focal position to receive maximum solar radiation.

Another aim is to obtain a supporting structure that can be easily and economically maintained and replacement of its components.

WO 2010/055397 discloses a solar concentrator, particularly of the type with a cylindrical-parabolic mirror.

EP1947403 discloses a support arm for a cylindrical-parabolic collector, which arm is intended to be coupled to a central body of the collector.

In order to overcome the drawbacks of the prior art and to obtain these and further aims and advantages, the Applicant has designed, tested and realized the present invention.

### INVENTION XPOSURE

The present invention is expressed and characterized in the independent claims 1 and 16. The respective dependent claims show futher features of the present invention or variants of the idea of main solution.

According to the aforesaid aims, a supporting structure according to the present invention can be used in a parabolic-linear solar plant of the concentration type for supporting reflective surfaces of parabolic shape with mirrors having curved surface, which intercept sun's rays directing them to a receiver member for energy production, such as a receiver tube in which an exchange heat fluid flows, or in replacement, or in combination, photovoltaic cells of concentration type. Said receiver member is disposed along a first axis of substantially alignment of focuses of said mirrors.

The supporting structure of the present invention comprises a supporting shaft that develops parallel to a second rotation axis, parallel, in turn, to said first axis. The second axis is provided, typically, near, or coincident with the mass center of structure and other components, such as mirrors and receiver organ.

Supporting centrings of the mirrors are mounted along said supporting shaft, transversal arranged on opposite sides with respect to said supporting shaft in a manner coordinated with the position of said mirrors, each of said supporting centrings presenting pivoting ends coupled to said supporting shaft.

According to the present invention, the supporting structure comprises first positioning blocks arranged along the supporting shaft in a way and positioning coordinated to the arrangement of the ribs. Said first positioning blocks present, on opposite sides with respect to the supporting shaft, first supporting faces turned, during the use, towards the centrings.

In addition, said pivoting ends of the centrings have second positioning blocks presenting second supporting faces turned, during the use, towards the supporting shaft and apt to cooperate abutting with said first supporting faces.

The first and second supporting faces have worked conjugated surfaces to define reciprocal coordinated shapes with each other, so as to ensure the accuracy of the positioning of the centrings with respect to the supporting shaft, so that the mirrors, supported by centrings, are properly oriented with their focuses aligned along said first axis.

In embodiments, first fixing means are provided to constrain said first positioning blocks with the second positioning blocks, making, thus, the centrings integral to the supporting shaft.

Therefore, with the present invention, all the long and complex adjustment operations subsequent to assembly on yard that are normally required, optimizing also the logistics of the yard itself, are avoided. In fact, said supporting blocks have just -configured, during the mounting in the yard, to cooperate with each other with high precision of coupling. This is possible thanks to the work of extreme accuracy which are subjected said first and second supporting faces, which are made preferably flattened by shaving removal, advantageously, milling and flatting with computerized numerical control machines.

In addition, maintenance and replacement of one or more components of the supporting structure are much faster and simpler because repetition operations of adjustments are no longer required for each component since, at least the first and second supporting blocks have already been coordinated with each other.

In embodiments, the supporting structure further comprises supporting elements of said mirrors, distributed along each of said centrings, from the center to the periphery of the structure. Said supporting elements have supporting surfaces, shaped in a coordinated manner with the curved surface of the mirrors and with the second supporting faces of the second positioning blocks, so to have a high precise positioning. In embodiments, second fixing means are provided to constrain said supporting elements to the mirrors. The above coordinated supporting surfaces of the supporting elements, realized by working with extremely low dimensional tolerance levels as the above first and second supporting faces, have shape correlated with both first supporting faces and second supporting faces, so that the mirrors supporting on a total area apt to determine the correct alignment of the focuses of the mirrors along the said first axis.

In some embodiments, the supporting structure of the present invention comprises a plurality of supporting plates, each of which is arranged in a spanning manner with respect to the supporting shaft, along said second axis.

Each of said supporting plates has, at both diametrically opposed ends, one relative of said first positioning blocks with the associated first supporting face turned, during the use, towards the coordinated centring.

Said embodiment has the advantage of eliminating the direct participation of mirrors to the transmission of the torque moment from the supporting shaft.

In embodiments, supporting plates fixed in diametrically opposed positions on the supporting shaft are provided to suit a typical concave shape with protruding teeth of the pivoting ends of the centrings.

In further embodiments, the supporting plates are distributed in pairs of plates side by side in correspondence with the fixing position of each of centrings.

In realization variants, in a coordinated manner to the arrangement of the centrings, a distribution along the supporting shaft of a first plurality of pairs of supporting plates and a second plurality of supporting plates in a diametrically opposite position on the supporting shaft is provided.

In embodiments, the supporting structure, as well as the supporting shaft, provides only said centrings, arranged transversal with respect to the supporting shaft, split so as to have two pairs of centrings for each row of mirrors arranged transversely to the second axis. This embodiment with no longitudinal current elements allows decoupling the rows of mirrors, so as to minimize stresses due to the torque moment transmitted by the structure to the mirrors. In addition, this reduces the overall weight of the structure, minimizes the number of components, facilitates transport and reduces the times for the structure assemblage.

In one embodiment, the structure of the present invention is made of metal. In variants of said embodiment the structure of the invention has surfaces treated with a chemical process of oxidation and corrosion protection, such as galvanization, except for at least the first and second supporting faces of the first and second positioning blocks and possibly of the supporting surfaces of said supporting elements, which, being processed by shaving removal, in order to determine a desired geometric shape, do not have the protective effects of this process.

In one embodiment of the present invention, the supporting structure of the present invention comprises supporting arms of articulated type that extend radially from the supporting shaft, by which supporting said receiver member.

Each of said supporting arms comprises an articulated attachment element for connecting the supporting shaft, which has pivoting faces having surfaces worked in a coordinated manner to at least said first supporting faces and said second supporting faces, to ensure a correct positioning of the receiver member along said first axis and coordinated with the positioning of said centrings.

In variants of this embodiment, the articulated attachment element has pivoting holes for a pivoting element, which are bored with a coordinated shape with respect to that of said pivoting faces, so that their pivoting axes are correctly positioned with respect to said pivoting faces.

In some embodiments of the present invention, the supporting structure comprises lateral flanges disposed at the ends of the supporting shaft for the connection to rotational movement members around said second axis.

Each of said lateral flanges has first broaching holes for the connection, by fixing pins, to said rotational movement members and second broaching holes for, direct or indirect, connection by further fixing pins to said supporting shaft. Said first and second broaching holes are made, mutually arranged and shaped in coordinated phase among them to reduce, or eliminate, the phase angle between head and tail of the solar plant in object.

It is also part of the present invention, a parabolic-linear solar plant of the concentration type comprising a supporting structure as expressed above.

It is also part of the present invention, a method for the realization of a supporting structure, usable in parabolic-linear solar plant of the concentration type, for supporting mirrors with curved surface, which intercept sun's rays and address them to a receiver member for energy production, such as a receiver tube wherein a heat exchange fluid flows, or in replacement or in combination, photovoltaic cells of concentration type. Said receiver member is disposed along a first axis of substantially alignment of the focuses of said mirrors.

The method requires to provide a supporting shaft that develops parallel to a second rotation axis, in turn, parallel to said first axis and mounting supporting centrings of the mirrors along said supporting shaft, placed transversally from opposite sides with respect to said supporting shaft in a coordinated manner with the position of said mirrors, coupled them, with respective pivoting ends, to said supporting shaft.

According to one aspect of the present invention, the method also provides to prepare first positioning block along the supporting shaft in a coordinated manner with the positioning of the centrings and to carry out, on said first positioning blocks, first supporting faces with high quality shaving removal processing, turned towards the centrings.

In addition, the method of the present invention provides to prepare second positioning blocks on said pivoting ends of the ribs, to carry out, with high precision shaving removal processing, second supporting faces on said second positioning blocks, apt to cooperate abutting with said first supporting faces turned towards the supporting shaft and to fix each other said first and second positioning blocks.

The method of the present invention provides that said shaving removal processing of the first and second supporting faces are carried out to define interrelated mutually forms, so as to ensure the precise positioning of the centrings with respect to the supporting shaft, so that the mirrors are correctly oriented with their focuses aligned along said first axis.

In further embodiments, the method of this invention provides to prepare supporting elements of said mirrors along each of said centrings, distributed from the center to the periphery and to carry out, on said supporting elements and by high precision shaving removal processing, supporting surfaces shaped in a coordinated manner with the curved surface of the mirrors and the second supporting faces of the second positioning blocks.

Embodiments of the present invention provide to carry out said removal processes using a reference template to which are fixed said centrings, without subsequent repositioning of the centrings themselves.

In embodiments of the present invention, the components of the supporting structure, including at least said first and second supporting faces of the first and second positioning blocks and possibly the supporting surfaces of said supporting elements are subjected to a chemical process of oxidation and corrosion protection, such as galvanization, and only then they are subjected to said shaving removal processing to obtain the desired precision reference of the mounting position.

In this way, the accuracy of the positioning of the mirrors is not affected by any internal stresses that said protection process may introduce in the material.

In some embodiments, the method of the present invention provides to realize supporting arms of articulated type that extend radially from the supporting shaft, through which, the supporting arms, support said receiver member, connecting each of said supporting arms to the supporting shaft by a relative articulated attach element. One aspect of the method of the present invention provides to carry out each articulated attach element with pivoting faces having surfaces that are working in a coordinated manner with at least the first faces and said second supporting faces, to ensure a correct positioning of the receiver member along said first axis and coordinated with the positioning of said centrings.

In some variants of these embodiments, the method provides to carry out by boring, pivoting holes of the articulated attachment element wherein to insert a pivoting element, pivoting holes being bored with a coordinated shape with respect to that of said pivoting faces, so that their axes are correctly positioned with respect to said pivoting faces.

In some embodiments of the present invention, the method provides to realize lateral flanges at the ends of supporting shaft for the connection to rotational movement elements around said second axis. A further aspect of the present invention provides to carry out first broaching holes for the connection to said rotational movement elements and second broaching holes for the direct or indirect connection to said supporting shaft, said first and second broaching holes being mutually arranged and shaped in phase coordinated among themselves to reduce, or eliminate, the phase angle between head and tail of the plant.

### ILLUSTRATION OF DRAWINGS

These and other features of the present invention will be clear from the following description of a preferred embodiment, provided by way of no limited example, with reference to the attached drawings wherein:
- fig. 1 is a side view of a supporting structure according to the present invention;
- fig. 2 is a front view of the structure of fig.1;
- fig. 3 is a prospetic view of the structure of fig.1;
- fig. 4 is an enlarged perspective view of a part of the structure of fig. 1;
- fig. 5 is a view in transparency of fig. 4;
- fig. 6 is a view of part of fig. 2, and a corresponding enlarged detail;
- fig. 7 is a view of another part of fig. 2, and a corresponding enlarged detail;
- fig. 8 is a perspective view of another part of the structure of fig. 1;
- fig. 9 is an enlarged detail of fig. 8;
- fig. 10 is a further enlarged detail of fig. 8;
- fig. 11 is a perspective view of another part of the structure of fig. 1.

To facilitate understanding, identical reference numbers have been used, where possible, to identify common identical elements in the figures.

### DESCRIPTION OF A PREFERRED EMBODIMENT

With reference to the attached figures, a supporting structure 10 according to the present invention is used in a parabolic-linear solar plant 14 of the concentration type to support in desired position a plurality of reflective surfaces of parabolic shape with mirrors 12.

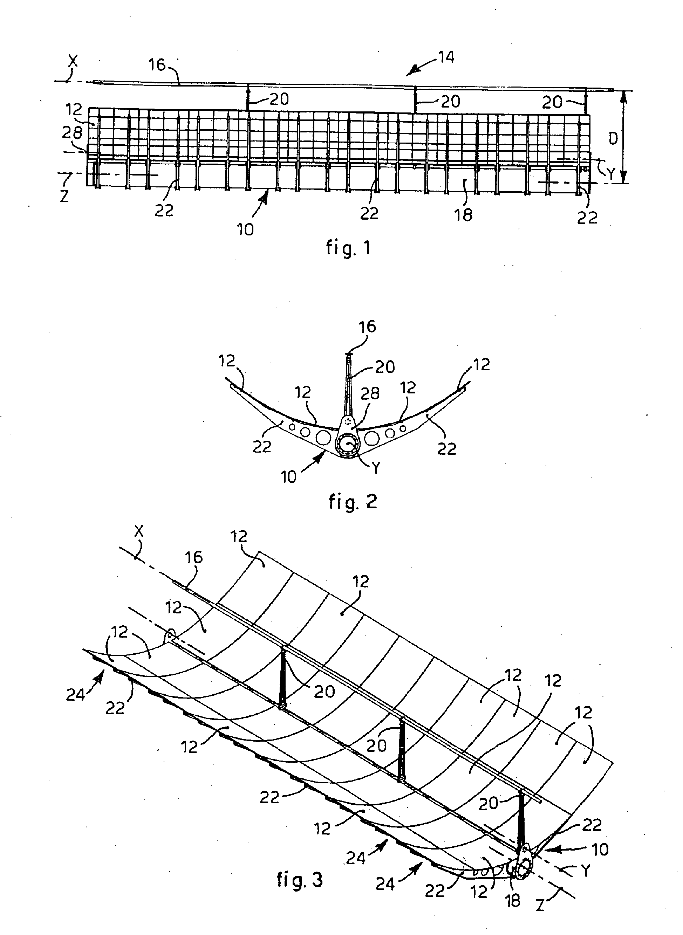

Said mirrors 12, each associated to a respective focus, are of parabolic shape and arranged according to a linear development parallel to a given first axis X to which ail the focuses of the mirrors 12 are aligned and centered around a supporting shaft 18, that develops parallel to a second rotation axis Y, parallel to said first axis X and spaced from it of a desired distance D related to the position of the focus (fig.1). Furthermore, the mirrors 12 are typically disposed transversally on one side and the other with respect to said supporting shaft 28 and said second axis Y, along rows 24.

Typically, the plant 14 comprises a receiver member on which sun's rays are directed to produce energy. In some embodiments, the receiver member is a heat exchange central receiver tube 16 that develops placed along said first axis X and in which, in normal running, a suitable fluid of heat exchange flows.

In other embodiments, the receiver member comprises photovoltaic cells of concentration type, in replacement or in association with the receiver tube.

In particular, the supporting shaft 18 has a desired diameter and is placed along a third axis Z, parallel to a second axis Y, around which the mirrors 12 are pivoted, spaced form said second axis Y of a desired quantity. Typically, the supporting shaft 18 may be placed in an eccentric rotation around the second axis Y, as described for example in the application UD2009A000121, so that the mirrors 12 may assume an optimized exposure condition to sun's rays at least according to the time of the day, following, for example, the azimuth angle of the sun. In this case, the second rotation axis Y is placed near to, or is coincident to, the mass center of the structure and of the other components of the plant 14, such as mirrors 12 and receiver member 16.

In some embodiments, the supporting shaft 18 is of modular type, made of tubular segments selectively attachable, pinned to obtain an accurate positioning, facilitating the transport of the structure with the segments of shaft that may be near each other.

The structure 10 of the present invention furthermore comprises supporting arms 20, made in metal, that in particular extend radially from the supportingshaft 18, expected spaced of a defined step, for example equally spaced.

The receiver member is connected to said supporting arms 20, in this case the central receiver tube 16 which, thus, is maintained supported and spaced from the mirrors 12, placed aligned to said first axis X. As better explained in the description hereinafter, the right positioning of the receiver tube 16 is given by the mechanical work of the articulated connection of the supporting arms 20, to obtain the desired reference of right position of mounting.

The sun's rays are intercepted by the mirrors 12 and directed, or diverted, in this case to the central receiver tube 16, where they heat the heat exchange fluid flowing in it, for the production of energy, or they supply concentration-type photovoltaic cells.

The structure 10 comprises centrings 22, made of metal, arranged and pivoted on both sides of the supporting shaft 18, in this case lied on a plane orthogonal to the Z axis along which the supporting shaft 18 develops. These centrings 22, each formed by an oblong profile of appropriate curved shape, support the mirrors 12.

In some embodiments, the structure 10 furthermore comprises longitudinal current elements, also made of metal, parallel to the supporting shaft 18, to connect in succession with each other the centrings 22 arranged on a same side with reference to the supporting shaft 18 and to stiffen the structure 10.

In other embodiments, the structure 10 is not provided with current elements and, therefore, two pairs of centrings 22, appropriately sized, for each row 24 of the mirrors 12, located in correspondence to the attachment points of the mirrors 12 themselves, are provided. In this way, it is possible to decouple the rows 24 of the mirrors 12 constituting a module of the plant 14, in order to minimize stresses due to the torque transmitted by the structure 10 to mirrors 12, thus avoiding the participation of mirrors 12 themselves to the torsional rigidity of the structure 10.

In embodiments, the structure 10, further, comprises lateral flanges 28, in metal, fixed at both ends of the supporting shaft 18b, in the case by angular positioning pins, through which connecting the supporting shaft 18 to the rotational movement members, not represented in the drawings. The elongated conformation of these lateral flanges 28 allows, in this case, an eccentric rotation of the supporting shaft 18 with respect to aforesaid second axis Y.

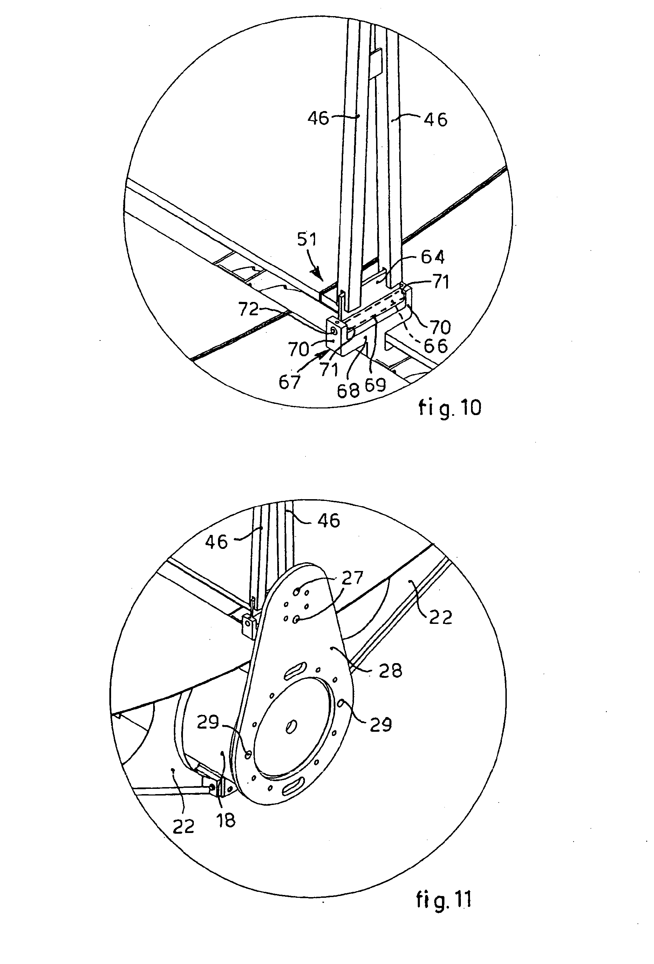

As shown in fig. 11, each lateral flange 28 may comprise first higher broaching holes 27, for the insertion of fixing pins to the aforesaid rotational movement members, and second lower broaching holes 29, for the insertion of fixing pins to the supporting shaft 18. The respective geometric arrangement between first higher broaching holes 27 and the second lower broaching holes 29 determines the distance between the second axis Y and the third axis Z and allows to obtain, in this case, the eccentric rotation of the supporting shaft 18.

The first broaching holes 27 are obtained radially with respect to a hypothetical circumference whose center is placed on the second axis Y, while the second broaching holes 29 are obtained radially with respect to a hypothetical circumference whose center is placed on the third axis Z. In this way, the distance between the Y and Z axis is determined by the broaching of the lateral flanges 28 respectively with respect to the supporting shaft 18 and the rotation movement members, not represented in the drawings, allowing the eccentric rotation.

The first broaching holes 27 and the second broaching holes 29 are advantageously obtained with high precision, for example by milling, during the same working phase, for both lateral flanges 28 to be fixed at the ends of supporting shaft 18, so to have substantially a null, or minimum, phase angle between the head and tail of the plant 14.

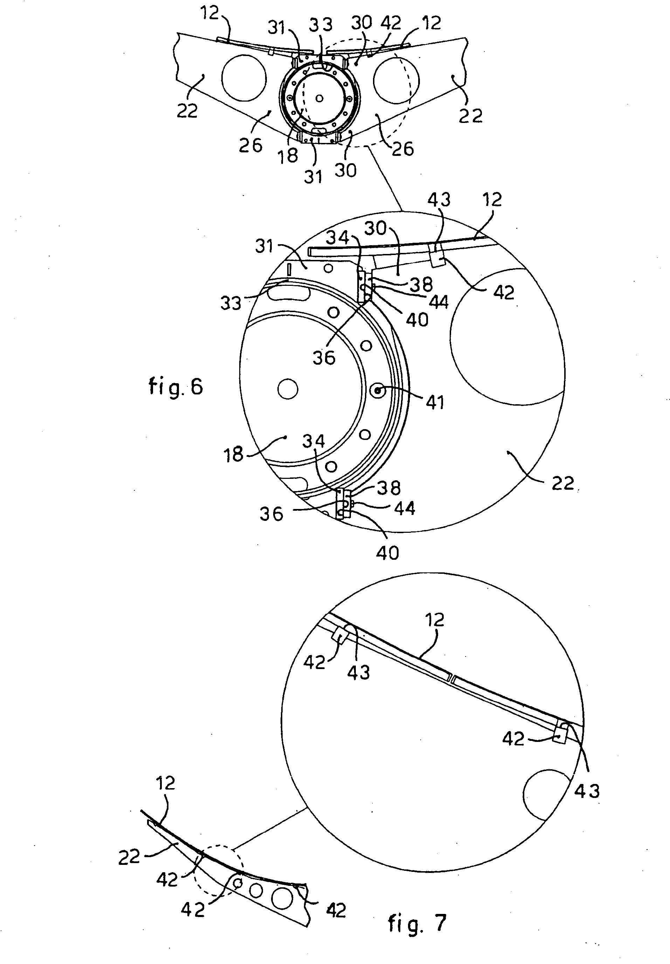

Furthermore, as shown in fig. 6, third broaching holes 41 are provided for the insertion of fixing pins to the shaft supporting18 and the connection of the lateral flanges 28.

The realization of the first 27, second 29 and possibly third 41 broaching holes is performed by processing with high precision, coordinated with the proper final positioning of the mirrors 22 and receiver tube 16, so as to ensure that, at a certain rotation of the supporting shaft 18, corresponds to a coordinated movement of the mirrors 12 and receiver tube 16, which is very important especially at the optimization phases of exposure to sun's rays.

In the traditional way, each of the aforesaid centrings 22 has one pivoting end 26 concave shaped, of form conjugated to that of the supporting shaft 18.

In this case, each pivoting end 26 comprises two opposing teeth 30 between which a concave seat 32 in the shape of circle arc in size related to the supporting shaft 18, develops. In particular, each pivoting end 26 has substantially a "C" shape.

The supporting shaft 18 of the structure 10 comprises first metal positioning block 34 for the positioning of centrings 22, arranged along the second axis Y at one step apart from each other, correlated with the axial positioning step of the centrings 22 themselves.

Each of said first positioning blocks 34 has first flattened supporting faces 36, facing outwards from the second axis Y, for the supporting of a respective pivoting end 26 of an associated centring 22.

In a related way, on each tooth 30 of each pivoting end 26 is placed a second metal positioning block 38 having a coordinated second flatted supporting face 40 turned to the second axis Y, whose conformation is coupled to that of aforesaid first flatted faces 36 of the first positioning blocks 34.

Both the first flatted faces 36 and the second flatted faces 40, as well as the first 27, second 29 and third 41 of the lateral flanges 28 and the connection of supporting arms 20 to the supporting shaft 18 and to the receiver tube 16, are made by a coordinated toll to obtain reciprocal geometrical compatibility, through shaving removal processing, advantageously by precision cutting, drilling, levelling and precision broaching with computerized numeric control (CNC) machines to obtain a high dimensional precision thereof. The expression "high precision" means a precision in the order of tenths of a millimetre.

In particular, the coordinated workings of the first flatted faces 36 and of the second flatted faces 40, as well as of the other components above cited, are apt to achieve desired levels of dimensional tolerance, still less of extremely low shape, or geometric, advantageously in the order of tenths of a millimetre, advantageously about 1-5 tenth of a millimetre, directed to the required precision of positioning of the mirrors 12 and of the receiver tube 16 with respect to the first axis X.

Once the first flatted faces 36 and the second flatted faces 40 are juxtaposed with the given accuracy, they are fixed each other by means of first fixing means 44, for example by screws and bolts, to precisely position and make the centrings 22 integral with the supporting shaft 18.

In embodiments, supporting plates 31, in metal, fixed in diametrically opposite position, above and below the supporting shaft 18, are provided. In particular, pairs of supporting flanges 31 arranged in pairs in correspondence to the fixed position of each centrings 22, are provided. The aforesaid supporting plates 31 have a coupling surface 33 (fig. 6) to the supporting shaft 18 which is concave, curved in a conjugated way to the lateral surface of the supporting shaft 18.

Said supporting plates 31 bring from one side to the other side of the supporting shaft 18, the aforesaid first positioning block 34. These supporting plates 31 are placed, in a spanning manner, along the supporting shaft 18, spaced with a step related to the position of the centrings 22.

This embodiment is advantageous because it eliminates the direct participation of the mirrors 12 to the twisting moment, which, however, is addressed to the supporting plates 31.

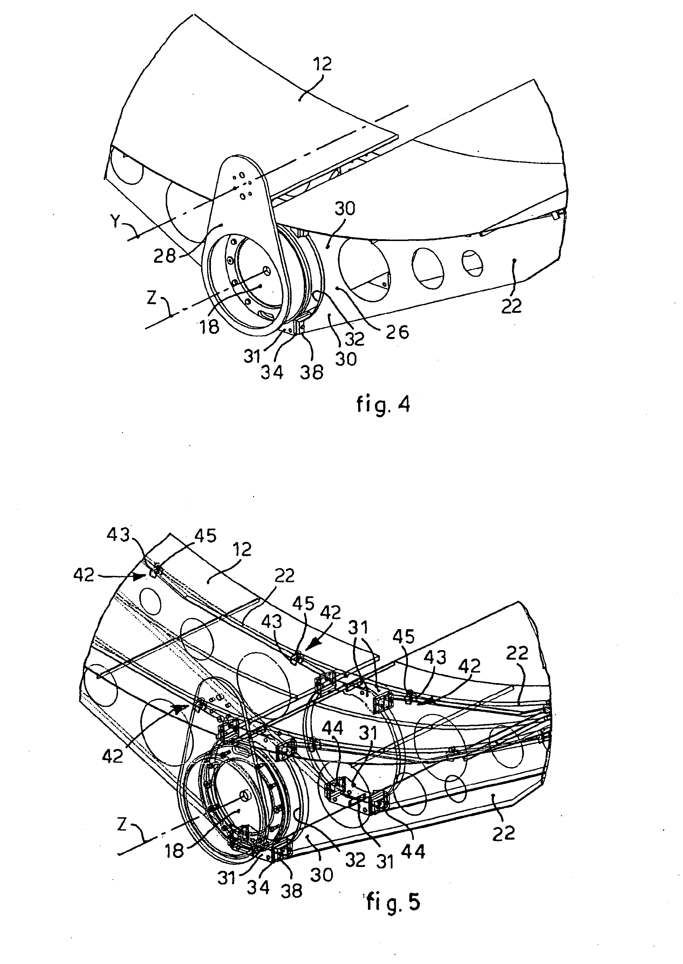

In addition, the structure 10 comprises one or more metal supporting elements 42 bound to each centrings 22, to define additional supporting surfaces 43 for the mirrors 12 on the centrings 22, as shown in fig. 5, 6 and 7, to which they are bound by second fixing means 45, in this case a respective bolted screw.

The supporting elements 42 are fixed, typically by welding, along the centrings 22. In embodiments, each of these supporting elements 42 is mould with a substantially "U" structure or a cup shape depending on centring 22 type used, and is welded in inverted position, in a spanning manner of the main development axis of a respective centring 22.

The supporting surface 43 of said supporting elements 42, intended to cooperate, in use, with the bottom surface of the mirror 12, is shaped in a conjugated way with the curved trend of the mirrors 12 themselves and even in a coordinated way with the shape and tolerances of the second flattened faces 40 of the second positioning blocks 38, through a high accurancy shaving removal processing as above described and specified.

Moreover, this high precision processing is advantageously applied also to the achievement of other components of the structure 10, in particular the supporting shaft 18, the centrings 22, supporting arms 20, any longitudinal current elements, if any.

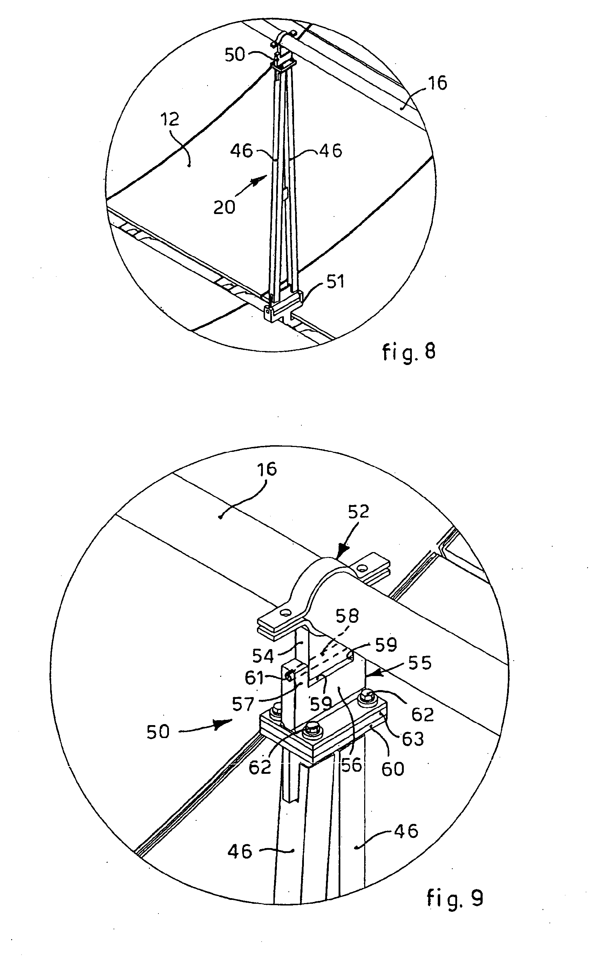

Fig. 8 and 9 illustrate in detail an embodiment of the supporting arms 20. In this case, each supporting arm 20 comprises uprights 46, which on one side are pivoted to a jointed supporting element 50, in turn fixed to the central receiver tube 16 by an attachment element, in this case a clamp, or collar, 52 (fig. 9), and on the other side are pivoted to a jointed attachment element 51, fixed to a plate 74, or made one body with it, which plate 74 in turn is fixed, in this case by welding, to the supporting shaft 18.

In particular, the jointed supporting element 50 provided a first upper hinging element 54 fixed to the clamp, or collar, 52, hinged by an upper pivot, or pin, 58 (shown in broken line) having a pivoting transversal axis, substantially orthogonal, to the first axis X, to a second upper hinging element 55. In this case, the second upper jointed element 55 is substantially shaped like a "U". For example, the second upper jointed element 55 has a transversal central body 56 having two lateral flaps 57 wherein pivoting holes 61 of the upper pivot 58 are obtained and which delimit a pivoting seat with internal pivoting faces 59, where the first upper jointed element 54 is positioned.

The second upper jointed element 55 is fixed by bolted screws 62, advantageously combined with insulating washers, to a connecting plate 60 in turn fixed to the upper ends of aforesaid uprights 46. Advantageously an intermediate plate 63 can be provided between the connecting plate 60 and the second upper jointed element 55, which acts as a thermal insulator between the supporting arm 20 and the receiver tube 16 which can reach very high temperature.

Instead, the jointed attachment element 51 (fig. 10) is formed by a first articulated lower element 64, bound at the lower end of the uprights 46 and a second articulated lower element 67, bound to said plate 74. A lower pivot, or pin, 66 (shown in broken line), having transversal pivoting axis, substantially orthogonal, to the first axis X, in this case housed in a hub 69, for hinging together the first lower articulated element 64 and the second lower articulated element 67.

In this case, the second lower articulated element 67 is shaped substantially like a "U". For example, the second lower articulated element 67 comprises a trasnsevrsal central body 68, connected, or in a single body, to said plate 74, having two lateral flaps 70 wherein pivoting holes 72, of the lower pivot 66, are obtained and that define a pivoting seat with internal pivoting faces 71, wherein the first articulated lower element 64 is positioned.

The realization of the internal pivoting faces 71 of the jointed attachment element 51 for the fastening at the supporting shaft 18 is advantageously performed through precision shaving removal processing, as described above, advantageously with a precision milling by computerized numeric control (CNC) machines in a coordinated manner with the processing on the first 36 and second 40 flattened faces, as well as with the supporting surfaces 43. This allows obtaining a high accuracy of receiver organ positioning, such as the receiver tube 16, and/or type-concentration photovoltaic cells, along said first X axis, avoiding the long and costly adjustments in yard. Advantageously, also the realization of the internal pivoting faces 59 of the jointed supporting element 50, for the connection to the receiver tube 16, is carried out with the aforementioned precision shaving removal processing.

Additionally, the realization of pivoting holes 72 of lower pivot 66, and advantageously also of pivoting holes 61 of the upper pivot 58, is carried out by a high precision boring operation, so that the pivoting axes are correctly placed with respect to the respective pivoting faces 71, and advantageously also to the respective pivoting faces 59, which in turn coordinates with the first 36 and second 40 flattened faces, as well as with the supporting surfaces 43.

In this way, we obtain a high accuracy and a coordination of both the positioning of the centring 22 in respect with the supporting shaft 18 and the receiver tube 16 in respect to the supporting shaft 18, ensuring that the centrings 22 are properly positioned for having an alignment of focuses of the mirrors 12 along the first axis X, and also that the receiver tube 16 is properly aligned along said first axis X.

In embodiments of the present invention, the precision processing by means of which carrying out the first 36 and second 40 flattened faces, the supporting surfaces 43, the broaching holes 21, 27 and 29, the pivoting holes for the upper pivot 58 and lower pivot 66, as well as the pivoting faces 59 and 71, is performed by placing the components to be processed on a reference template that shows precisely the surfaces and the inclinations to be obtained through milling, flatting and boring.

Specifically, once the centring 22 is fixed on the appropriate template, we proceed, without following its repositionings, with the shaving removal processing of both the second flattened faces 40 of the second positioning blocks 38, and the supporting surfaces 43 of the supporting elements 42, which are thus closely related. In this way we obtain a correct alignment of the centrings 22, and therefore of the mirrors 12 supported by them, compared to the first -axis X during mounting phase on the supporting shaft 18.

Similarly, using a suitably reference equipped, at least further processes are made, always without repositioning, for shaving removing of components associated with the supporting shaft 18, or at least the pivoting holes 72 for the lower pivot 66, as well as the pivoting faces of 71, also worked in coordination between themselves and with the first 36 and second 40 flattened faces, as well as the aforementioned supporting surfaces 43. In this way we obtain a correct positioning for the supporting arms 20 and then aligning of the receiver organ, in this case, the receiver tube 16, with respect of the first axis X, during the mounting phase on the supporting shaft 18 .

Such precision processes are performed, at least for components that are directly associated with the supporting shaft 18, subsequently to the normal chemical process of protection from oxidation and corrosion of metal that is usually carried out on components of the structure 10, typically galvanization. In this way said processes are not influenced by the possible internal tensions that can arise during these processes and that can lead, in some cases, to shape variations of the components of the structure 10.

This allows eliminating, almost completely, any adjustment in yard, reducing, therefore, time and installation costs.

According to the present invention, in fact, the first positioning block 34 and the second positioning block 38, after that their supporting surfaces are processed in a mutually correlated way, even with the aforesaid supporting elements 42, such as supporting arms 20 coordinately processed, define an overall reference system for precise positioning of both the support centrings 22 of the mirrors 12, and the receiver organ, in this case the receiver tube 16, respectively, depending on the correct alignment of their focuses along the first axis X to be obtained.

## Claims

1. Supporting structure for a parabolic-linear solar plant (14) of the concentration type, suitable to support mirrors (12) with a curved surface, which intercept the sun's rays and direct them towards a receiver member to produce energy, such as a receiver tube (16) in which a heat exchange fluid flows and/or concentration-type photovoltaic cells, the receiver member being disposed along a first axis (X) of substantial alignment of the focuses of said mirrors (12), said supporting structure comprising a supporting shaft (18) that develops parallel to a second rotation axis (Y) parallel to said first axis (X), supporting centrings (22) for supporting the mirrors (12) being assembled along said supporting shaft (18), disposed transverse on opposite sides with respect to said supporting shaft (18) in a manner coordinated with the position of said mirrors (12), each of said supporting centrings (22) having pivoting ends (26) coupled with said supporting shaft (18), **characterized in that** said supporting structure also comprises first positioning blocks (34) disposed along the supporting shaft (18) in a manner coordinated with the disposition of the centrings (22), which, on opposite sides with respect to said supporting shaft (18), have first supporting faces (36), facing during use towards the centrings (22), and **in that** said pivoting ends (26) of the centrings (22) carry second positioning blocks (38) that have second supporting faces (40) facing during use towards the supporting shaft (18) and able to cooperate abutting with said first supporting faces (36), said first supporting faces (36) and said second supporting faces (40) having combined worked surfaces to define reciprocally coordinated shapes, so as to guarantee the precise positioning of the centrings (22) with respect to the supporting shaft (18), so that the mirrors (12) supported by the centrings (22) are correctly oriented with their focuses aligned along said first axis (X).

2. Supporting structure according to claim 1, **characterized in that** first fixing means (44) are provided to constrain said first positioning blocks (34) with said second positioning blocks (38), making the centrings (22) fixed at the supporting shaft (18).

3. Supporting structure according to claim 1 or 2, **characterized in that** it also comprises supporting elements (42) for said mirrors (12), distributed along each of said centrings (22) from the center towards the periphery, said supporting elements (42) having supporting surfaces (43) which are shaped in coordinated manner with the curved surface of the mirrors (12) and with the second supporting faces (40) of the second positioning blocks (38).

4. Supporting structure according to claim 3, **characterized in that** said supporting surfaces (43) have a shape correlated both with the first supporting faces (36) and also with the second supporting faces (40), so that the mirrors (12) rest on an overall surface that is suitable to determine the correct alignment of the focuses of the mirrors (12) along the first axis (X).

5. Supporting structure according to claim 3 or 4, **characterized in that** it comprises second fixing means (45) to constrain said supporting elements (42) to the mirrors (12).

6. Supporting structure according to any claim hereinbefore, **characterized in that** it comprises a plurality of supporting plates (31), each of which is disposed in a spanning manner with respect of the supporting shaft (18), along said second axis (Y), each of said supporting plates (31) bearing, at both diametrically opposite ends, a respective one of said first positioning blocks (34) with the associated first supporting face (36) facing during use towards the coordinated centring (22).

7. Supporting structure according to claim 6, **characterized in that** it provides supporting plates (31) attached in diametrically opposite positions on the supporting shaft (18), to adapt to a concave conformation with protruding teeth (30) of the pivoting ends (26) of the centrings (22).

8. Supporting structure according to claim 6 or 7, **characterized in that** said supporting plates (31) are distributed in pairs of adjacent plates in correspondence with the fixing position of each of the centrings (22).

9. Supporting structure according toclaim 8, **characterized in that** in coordination with the disposition of the centrings (22), a distribution is provided along the supporting shaft (18) of a first plurality of pairs of supporting plates and a second plurality of supporting plates in a diametrically opposite position on the supporting shaft (18).

10. Supporting structure according to any one of the preceding claims, **characterized in that** as well as the supporting shaft (18) it provides only said centrings (22), disposed transverse to the supporting shaft (18), divided so that there are two pairs of centrings for each row (24) of mirrors (12) disposed transverse to the second axis (Y).

11. Supporting structure according to any one of the preceding claims, comprising supporting arms (20) of the articulated type that extend radially from the supporting shaft X (18), by means of which said receiver member is supported, **characterized in that** each of said supporting arms (20) comprises an jointed attachment element (51) for connection to the supporting shaft (18), which has pivoting faces (71) having worked surfaces in a manner coordinated at least with said first supporting faces (36) and said second supporting faces (40), to guarantee a correct positioning of the receiver member along said first axis (X) and coordinated with the positioning of said centrings (22).

12. Supporting structure according to claim 11, **characterized in that** the jointed attachment element (51) has pivoting holes (72) for a pivoting element (66), said pivoting holes (72) being bored with a shape coordinated with that of said pivoting faces (71), so that the respective pivoting axes are correctly positioned with respect to said pivoting faces (71).

13. Supporting structure according to any one of the preceding claims, **characterized in that** it comprises lateral flanges (28) disposed at the ends of the supporting shaft (18) for connection to rotational movement members around said second axis (Y), each of said lateral flanges (28) having first broaching holes (27) for connection to said rotational movement members and second broaching holes (29) for connection, direct or indirect, to said supporting shaft (18), said first broaching holes (27) and second broaching holes (29) being made reciprocally disposed and shaped in a coordinated step with each other, so as to reduce or eliminate the angular phase shift between the head and tail of the plant (14).

14. Supporting structure according to any one of the preceding claims, **characterized in that** at least said first supporting faces (36) and said second supporting faces (40) are flat.

15. Parabolic-linear solar plant of the concentration type comprising a supporting structure (10) according to any one of the preceding claims.

16. Method to produce a supporting structure (10) usable in a parabolic-linear solar plant (14) of the concentration type, to supporting mirrors (12) with a curved surface, which intercept the sun's rays and direct them towards a receiver member to produce energy, such as a receiver tube (16) in which a heat exchange fluid flows and/or concentration-type photovoltaic cells, the receiver member being disposed along a first axis (X) of substantial alignment of the focuses of said mirrors (12), said method providing to make available a supporting shaft (18) that develops parallel to a second rotation axis (Y) parallel to said first axis (X), and to mount centrings (22) to support the mirrors (12) along said supporting shaft (18), disposed transverse on opposite sides with respect to said supporting shaft (18) in a manner coordinated with the position of said mirrors (12), coupling them with respective pivoting ends (26) to said supporting shaft (18), **characterized in that** it provides:
- to dispose first positioning blocks (34) along the supporting shaft (18) in a manner coordinated with the disposition of the centrings (22), and to make, on said first positioning blocks (34), first supporting faces (36) by means of a high-precision chip removing process, facing towards the centrings (22);
- to dispose second positioning blocks (38) on said pivoting ends (26) of the centrings (22), to make second supporting faces (40) by means of a high-precision chip removing process on said second positioning blocks (38), suitable to cooperate abutting with said first supporting faces (36) and facing towards the supporting shaft (18), and to attach to each other said first positioning blocks (34) and said second positioning blocks (38);
said chip removing processes of the first supporting faces (36) and the second supporting X faces (40) being performed to define reciprocally coordinated shapes, so as to guarantee the precise positioning of the centrings (22) with respect to the supporting shaft (18), so that the mirrors (12) supported by the centrings (22) are correctly oriented with their focuses aligned along said first axis (X).

17. Method according to claim 16, **characterized in that** it provides to dispose supporting elements (42) for said mirrors (12) along each of said centrings (22), distributed from the center towards the periphery, and to make on said supporting elements (42), by means of a high-precision shaving removing process, supporting surfaces (43) which are shaped in coordination with the curved surface of the mirrors (12) and with the second supporting faces (40) of the second positioning blocks (38).

18. Method according to claim 16 or 17, **characterized in that** the components of the supporting structure (10), comprising at least said first (36) and second (40) supporting faces of the first (34) and second (38) positioning blocks, are subjected to a chemical process to protect them from oxidation and only later are subjected to said shaving removal processes in order to obtain the desired precision reference of the assembly position.

19. Method according to claim 16, 17 or 18, which provides to dispose supporting arms (20) of the articulated type that extend radially from the supporting shaft (18), by means of which said receiver member is supported, connecting each of said supporting arms (20) to the supporting shaft (18) by means of a respective jointed attachment element (51), **characterized in that** it makes each jointed attachment element (51) with pivoting faces (71) having surfaces that are worked in a manner coordinated at least with said first supporting faces (36) and said second supporting faces (40), so as to guarantee a correct positioning of the receiver member along said first axis (X) and coordinated with the positioning of said centrings (22).

20. Method according to claim 19, **characterized in that**, by means of boring, it makes pivoting holes (72) of the jointed attachment element (51) into which a pivoting element (66) is inserted, the pivoting holes (72) being bored with a shape coordinated with that of said pivoting faces (71), so that the respective pivoting axes are correctly positioned with respect to said pivoting faces (71).

21. Method according to any one of the claim 16 to 20, which provides to dispose lateral flanges (28) at the ends of the supporting shaft (18) for connection to rotational movement members around said second axis (Y), **characterized in that** it makes first broaching holes (27) for connection to said rotational movement members and second broaching holes (29) for connection, direct or indirect, to said supporting shaft (18), said first broaching holes (27) and second broaching holes (29) being reciprocally disposed and shaped in a coordinated step with each other, so as to reduce or eliminate the angular phase shift between the head and tail of the plant (14).

## Patentansprüche

1. Stützstruktur für eine parabolische lineare Solaranlage (14) vom Konzentratortyp, die geeignet ist, Spiegel (12) mit einer gekrümmten Oberfläche zu unterstützen, die die Sonnenstrahlen auffangen und sie, um Energie zu erzeugen, in Richtung eines Empfangsteils, wie zum Beispiel ein Empfangsrohr (16), in dem eine Wärmetauscherflüssigkeit fließt, und/oder Photovoltaikzellen vom Konzentratortyp ausrichten, wobei das Empfangsteil entlang einer ersten Achse (X), im Wesentliche in einer Linie mit den Fokussen der Spiegel (12), angeordnet ist, wobei die Stützstruktur umfasst: eine Stützwelle (18), die sich parallel zu einer zweiten Rotationsachse (Y), parallel zu der ersten Achse (X), entwickelt, Stützzentrierungen (22) zur Unterstützung der Spiegel (12), die entlang der Stützwelle (18), bezüglich der Stützwelle (18) auf gegenüberliegenden Seiten quer laufend angeordnet, in einer Art und Weise montiert sind, die mit dem Standort der Spiegel (12) abgestimmt ist, wobei jede der Stützzentrierungen (22) über schwenkbare Enden (26) verfügt, die an die Stützwelle (18) gekoppelt sind, **dadurch gekennzeichnet, dass** die Stützstruktur außerdem erste Positioniersätze (34) umfasst, die entlang der Stützwelle (18) in einer Art und Weise angeordnet sind, die mit der Anordnung der Zentrierungen (22) abgestimmt ist, die bezüglich der Stützwelle (18) auf gegenüberliegenden Seiten über erste Stützflächen (36) verfügen, die bei Verwendung in Richtung der Zentrierungen (22) zeigen, und dadurch, dass die schwenkbaren Enden (26) Zentrierungen (22) zweite Positionssätze (38) tragen, die über zweite Stützflächen (40) verfügen, die bei Verwendung in Richtung der Stützwelle (18) zeigen und in der Lage sind angrenzend mit den ersten Stützflächen (36) zu kooperieren, wobei die ersten Stützflächen (36) und die zweiten Stützflächen (40) über kombiniert gearbeitete Oberflächen verfügen, um wechselseitig abgestimmte Formen zu definieren, um so die präzise Positionierung der Zentrierungen (22) bezüglich der Stützwelle (18) zu gewährleisten, so dass die durch die Zentrierungen (22) unterstützten Spiegel (12) korrekt, mit ihren Fokussen entlang der ersten Achse (X) ausgerichtet, ausgerichtet werden.

2. Stützstruktur gemäß Anspruch 1, **dadurch gekennzeichnet, dass** erste Befestigungsmittel (44) zur Sicherung der ersten Positioniersätze (34) an die zweiten Positioniersätze (38) zur Verfügung gestellt werden, wodurch die Zentrierungen (22) an die Stützwelle (18) befestigt werden.

3. Stützstruktur gemäß Anspruch 1 oder 2, **dadurch gekennzeichnet, dass** sie weiterhin Stützelemente (42) für die Spiegel (12) umfasst, die entlang jeder von den Zentrierungen (22) von dem Zentrum in Richtung der Peripherie verteilt sind, wobei die Stützelemente (42) über Stützflächen (43) verfügen, die in einer mit der gekrümmten Oberfläche der Spiegel (12) und mit den zweiten Stützflächen (40) der zweiten Positioniersätze (38) abgestimmten Art und Weise geformt sind.

4. Stützstruktur gemäß Anspruch 3, **dadurch gekennzeichnet, dass** die Stützflächen (43) über eine Form verfügen, die sowohl mit den ersten Stützflächen (36) als auch mit den zweiten Stützflächen (40) korreliert, so dass die Spiegel (12) auf einer Gesamtoberfläche ruhen, die geeignet ist die korrekte Ausrichtung der Fokusse der Spiegel (12) entlang der ersten Achse (X) zu bestimmen.

5. Stützstruktur gemäß Anspruch 3 oder 4, **dadurch gekennzeichnet, dass** sie zweite Befestigungsmittel (45) zur Sicherung der Stützelemente (42) an die Spiegel (12) umfasst.

6. Stützstruktur gemäß einem, der vorangehenden Ansprüche, **dadurch gekennzeichnet, dass** sie eine Mehrzahl von Stützplatten (31) umfasst, wobei jede von ihnen, bezüglich der Stützwelle (18), entlang der zweiten Achse (Y) umfassend angeordnet ist, wobei jede der Stützplatten (31) an beiden diametral gegenüberliegenden Enden einen entsprechenden der ersten Positioniersätze (34) trägt, wobei die verknüpfte erste Stützfläche (36) bei Verwendung in Richtung der abgestimmten Zentrierung (22) zeigt.

7. Stützstruktur gemäß Anspruch 6, **dadurch gekennzeichnet, dass** sie Stützplatten (31) zur Verfügung stellt, die an diametral gegenüberliegenden Standorten auf der Stützwelle (18) befestigt sind, um sich einer konkaven Konformation mit vorspringenden Zähnen (30) der schwenkbaren Enden (26) der Zentrierungen (22) anzugleichen.

8. Stützstruktur gemäß Anspruch 6 oder 7, **dadurch gekennzeichnet, dass** die Stützplatten (31) in Paaren von angrenzenden Platten entsprechend dem Befestigungsstandort einer jeden der Zentrierungen (22) verteilt sind.

9. Stützstruktur gemäß Anspruch 8, **dadurch gekennzeichnet, dass**, in Abstimmung mit der Anordnung der Zentrierungen (22), eine Verteilung einer ersten Mehrzahl von Paaren von Stützplatten und einer zweite Mehrzahl von Stützplatten an einem diametral gegenüberliegenden Standort auf der Stützwelle (18) entlang der Stützwelle (18) zur Verfügung gestellt wird.

10. Stützstruktur gemäß einem der vorangehenden Ansprüche, **dadurch gekennzeichnet**, das sie, ebenso wie die Stützwelle (18), nur die Zentrierungen (22) zur Verfügung stellt, die zu der Stützwelle (18) quer laufend angeordnet sind, so geteilt, dass es zwei Paare von Zentrierungen für jede Reihe (24) von Spiegeln (12) gibt, die quer zu der zweiten Achse (Y) angeordnet sind.

11. Stützstruktur gemäß einem der vorangehenden Ansprüche, die Stützarme (20) nach Art eines Gelenkarms umfasst, die sich radial von der Stützwelle (18) erstrecken, wodurch das Empfangsteil unterstützt wird, **dadurch gekennzeichnet, dass** jeder der Stützarme (20) umfasst: ein verbundenes Befestigungselement (51) zur Verbindung mit der Stützwelle (18), das über schwenkbare Flächen (71) verfügt, die Oberflächen haben, die in Abstimmung mindestens mit den ersten Stützflächen (36) und den zweiten Stützflächen (40) gearbeitet sind, um eine korrekte Positionierung des Empfangsteils entlang der ersten Achse (X) zu gewährleisten, und in Abstimmung mit der Anordnung der Zentrierungen (22) gearbeitet sind.

12. Stützstruktur gemäß Anspruch 11, **dadurch gekennzeichnet, dass** das verbundene Befestigungselement (51) über schwenkbare Löcher (72) für ein schwenkbares Element (66) verfügt, wobei die schwenkbaren Löcher (72) mit einer Form gebohrt sind, die mit der Form der schwenkbaren Flächen (71) abgestimmt ist, so dass die jeweiligen schwenkbaren Achsen bezüglich der schwenkbaren Flächen (71) korrekt positioniert sind.

13. Stützstruktur gemäß einem der vorangehenden Ansprüche, **dadurch gekennzeichnet, dass** sie seitliche Flansche (28), die bei den Enden der Stützwelle (18) angeordnet sind, zur Verbindung mit Rotationsbewegungsteilen um die zweite Achse (Y) umfasst, wobei jeder von den seitlichen Flanschen (28) über erste Räumungslöcher (27) zur Verbindung mit den Rotationsbewegungsteilen und zweite Räumungslöcher (29) zur direkten oder indirekten Verbindung mit der Stützwelle (18) verfügt, wobei die ersten Räumungslöcher (27) und die zweiten Räumungslöcher (29) so gemacht sind, dass sie reziprok angeordnet sind, und in einem miteinander abgestimmten Schritt geformt werden, um so die Winkelphasenverschiebung zwischen dem Kopf und dem Fuß der Anlage (14) zu verringern oder zu eliminieren.

14. Stützstruktur gemäß einem der vorangehenden Ansprüche, **dadurch gekennzeichnet, dass** mindestens die ersten Stützflächen (36) und die zweiten Stützflächen (40) flach sind.

15. Parabolische lineare Solaranlage vom Konzentratortyp, die eine Stützstruktur (10) gemäß einem der vorangehenden Ansprüche umfasst.

16. Verfahren zur Herstellung einer Stützstruktur (10) zur Verwendung in einer parabolischen linearen Solaranlage (14) vom Konzentratortyp zur Unterstützung von Spiegeln (12) mit einer gekrümmten Oberfläche, die die Sonnenstrahlen auffangen und sie, um Energie zu erzeugen, in Richtung eine Empfangsteils, wie zum Beispiel ein Empfangsrohr (16), in dem eine Wärmetauscherflüssigkeit fließt, und/oder Photovoltaikzellen vom Konzentratortyp ausrichten, wobei das Empfangsteil entlang einer ersten Achse (X), im Wesentlichen in einer Linie mit den Fokussen der Spiegel (12), angeordnet ist, wobei das Verfahren umfasst: die Bereitstellung einer Stützwelle (18), die sich parallel zu einer zweiten Rotationsachse (Y), parallel zu der ersten Achse (X), entwickelt, und die Befestigung von Zentrierungen (22) zur Unterstützung der Spiegel (12) entlang der Stützwelle (18), bezüglich der Stützwelle (18) auf gegenüberliegenden Seiten quer laufend angeordnet, in einer Art und Weise, die mit dem Standort der Spiegel (12) abgestimmt ist, wobei sie mit entsprechenden schwenkbaren Enden (26) an die Stützwelle (18) gekoppelt werden, **dadurch gekennzeichnet, dass** es umfasst:
- Anordnung erster Positioniersätze (34) entlang der Stützwelle (18) in einer Art und Weise, die mit der Anordnung der Zentrierungen (22) abgestimmt ist, und Herstellung, durch ein Hochpräzisions-Spanabfuhr-Verfahren, erster Stützflächen (36), die in Richtung der Zentrierungen (22) zeigen, auf den ersten Positioniersätzen (34);
- Anordnung zweiter Positioniersätze (38) auf den schwenkbaren Enden (26) der Zentrierungen (22) zur Herstellung zweiter Stützflächen (40), durch ein Hochpräzisions-Spanabfuhr-Verfahren, auf den zweiten Positioniersätzen (38), die in der Lage sind angrenzend mit den ersten Stützflächen (36) zu kooperieren und in Richtung der Stützwelle (18) zeigen, und gegenseitige Befestigung der ersten Positioniersätze (34) und der zweiten Positioniersätze (38);
wobei die Spanabfuhr-Verfahren der ersten Stützflächen (36) und der zweiten Stützflächen (40) durchgeführt werden, um wechselseitig abgestimmte Formen zu definieren, um so die präzise Positionierung der Zentrierungen (22) bezüglich der Stützwelle (18) zu gewährleisten, so dass die durch die Zentrierungen (22) unterstützten Spiegel (12), mit ihren Fokussen entlang der ersten Achse (X) ausgerichtet, korrekt ausgerichtet werden.

17. Verfahren gemäß Anspruch 16, **dadurch gekennzeichnet, dass** es umfasst: Anordnung von Stützelementen (42) für die Spiegel (12) entlang einer jeden der Zentrierungen (22), die von dem Zentrum in Richtung der Peripherie verteilt sind, und Herstellung, durch ein Hochpräzisions-Spanabfuhr-Verfahren, von Stützflächen (43), die in Abstimmung mit der gekrümmten Fläche der Spiegel (12) und mit den zweiten Stützflächen (40) der zweiten Positioniersätze (38) geformt werden, auf den Stützelementen (42).

18. Verfahren gemäß Anspruch 16 oder 17, **dadurch gekennzeichnet, dass** die Komponenten der Stützstruktur (10), die mindestens die ersten (36) und zweiten (40) Stützflächen der ersten (34) und zweiten (38) Positioniersätze umfassen, einem chemischen Verfahren ausgesetzt werden, um sie vor Oxidation zu schützen, und erst später dem Spanabfuhr-Verfahren unterzogen werden, um die gewünschte Präzisions-Referenz des Montagestandortes zu erhalten.

19. Verfahren gemäß Anspruch 16, 17 oder 18, das umfasst: Anordnung von Stützarmen (20) nach Art eines Gelenkarms, die sich radial von der Stützwelle (18) erstrecken, wodurch das Empfangsteil unterstützt wird, wobei jeder von den Stützarmen (20) durch ein entsprechendes verbundenes Befestigungselement (51) mit der Stützwelle (18) verbunden wird, **dadurch gekennzeichnet, dass** es jedes verbundene Befestigungselement (51) mit schwenkbaren Flächen (71) herstellt, die über Oberflächen verfügen, die mindestens in Abstimmung mit den ersten Stützflächen (36) und den zweiten Stützflächen (40) gearbeitet sind, um so eine korrekte Positionierung des Empfangsteils entlang der ersten Achse (X) zu gewährleisten, und in Abstimmung mit der Anordnung der Zentrierungen (22) gearbeitet sind.

20. Verfahren gemäß Anspruch 19, **dadurch gekennzeichnet, dass** es, durch Bohren, schwenkbare Löcher (72) des verbundenen Befestigungselements (51) herstellt, in die ein schwenkbares Element (66) eingesetzt wird, wobei die schwenkbaren Löcher (72) mit einer Form gebohrt werden, die mit der Form der schwenkbaren Flächen (71) abgestimmt wird, so dass die entsprechenden Schwenkachsen bezüglich der schwenkbaren Flächen (71) korrekt positioniert werden.

21. Verfahren gemäß einem der Ansprüche 16 bis 20, das umfasst: Anordnung von seitlichen Flanschen (28) bei den Enden der Stützwelle (18) zur Verbindung mit Rotationsbewegungsteilen um die zweite Achse (Y), **dadurch gekennzeichnet, dass** es erste Räumungslöcher (27) zur Verbindung mit den Rotationsbewegungsteilen herstellt und zweite Räumungslöcher (29) zur direkten oder indirekten Verbindung mit der Stützwelle (18) herstellt, wobei die ersten Räumungslöcher (27) und die zweiten Räumungslöcher (29) so gemacht sind, dass sie reziprok angeordnet sind und in einem miteinander abgestimmten Schritt geformt werden, um so die Winkelphasenverschiebung zwischen dem Kopf und dem Fuß der Anlage (14) zu verringern oder zu eliminieren.

## Revendications

1. Structure de support pour installation solaire parabolique-linéaire (14) du type à concentration, adaptée pour supporter des miroirs (12) ayant une surface courbée, qui captent les rayons du soleil et les dirigent vers un élément récepteur pour produire de l'énergie, comme un tube récepteur (16) dans lequel circule un fluide d'échange de chaleur et/ou des cellules photovoltaïques du type à concentration, l'élément récepteur étant disposé le long d'un premier axe (X) d'alignement substantiel des foyers desdits miroirs (12), ladite structure de support comprenant un arbre de support (18) qui se développe parallèlement à un deuxième axe de rotation (Y) parallèle audit premier axe (X), des supports de centrage (22) pour supporter les miroirs (12) étant montés le long dudit arbre de support (18), disposés transversalement sur des côtés opposés par rapport audit arbre de support (18) d'une manière coordonnée avec la position desdits miroirs (12), chacun desdits supports de centrage (22) ayant des extrémités pivotantes (26) accouplées audit arbre de support (18), **caractérisée en ce que** ladite structure de support comprend aussi des premiers blocs de positionnement (34) disposés le long de l'arbre de support (18) d'une manière coordonnée avec la disposition des supports de centrage (22), qui, sur des côtés opposés par rapport audit arbre de support (18), ont des premières faces de support (36), tournées pendant l'utilisation vers les supports de centrage (22), et **en ce que** lesdites extrémités pivotantes (26) des supports de centrage (22) portent des deuxièmes blocs de positionnement (38) qui ont des deuxièmes faces de support (40) tournées pendant l'utilisation vers l'arbre de support (18) et aptes à coopérer en butée avec lesdites premières faces de support (36), lesdites premières faces de support (36) et lesdites deuxièmes faces de support (40) ayant des surfaces usinées combinées pour définir des formes réciproquement coordonnées, afin de garantir le positionnement précis des supports de centrage (22) par rapport à l'arbre de support (18), de sorte que les miroirs (12) supportés par les supports de centrage (22) sont orientés correctement avec leurs foyers alignés le long dudit premier axe (X).

2. Structure de support selon la revendication 1, **caractérisée en ce que** des premiers moyens de fixation (44) sont prévus pour immobiliser lesdits premiers blocs de positionnement (34) avec lesdits deuxièmes blocs de positionnement (38), en rendant les supports de centrage (22) fixes sur l'arbre de support (18).

3. Structure de support selon la revendication 1 ou 2, **caractérisée en ce qu'**elle comprend en outre des éléments de support (42) pour lesdits miroirs (12), répartis le long de chacun desdits supports de centrage (22) du centre vers la périphérie, lesdits éléments de support (42) ayant des surfaces de support (43) dont la forme est coordonnée à la surface courbée des miroirs (12) et aux deuxièmes faces de support (40) des deuxièmes blocs de positionnement (38).

4. Structure de support selon la revendication 3, **caractérisée en ce que** lesdites surfaces de support (43) ont une forme corrélée à la fois aux premières faces de support (36) et aux deuxième faces de support (40), de sorte que les miroirs (12) reposent sur une surface d'ensemble qui est appropriée pour déterminer l'alignement correct des foyers des miroirs (12) le long du premier axe (X).

5. Structure de support selon la revendication 3 ou 4, **caractérisée en ce qu'**elle comprend des deuxièmes moyens de fixation (45) pour rendre lesdits éléments de support (42) solidaires des miroirs (12).

6. Structure de support selon l'une quelconque des revendications précédentes, **caractérisée en ce qu'**elle comprend une pluralité de plaques de support (31), chacune d'entre elles étant disposée en travers par rapport à l'arbre de support (18), le long dudit deuxième axe (Y), chacune desdites plaques de support (31) supportant, à deux extrémités diamétralement opposées, un premier bloc de positionnement (34) respectif avec la première face de support (36) associée tournée pendant l'utilisation vers le support de centrage coordonné (22).

7. Structure de support selon la revendication 6, **caractérisée en ce qu'**elle fournit des plaques de support (31) fixées en des positions diamétralement opposées sur l'arbre de support (18), pour s'adapter à une conformation concave avec des dents saillantes (30) des extrémités pivotantes (26) des supports de centrage (22).

8. Structure de support selon la revendication 6 ou 7, **caractérisée en ce que** lesdites plaques de support (31) sont réparties par paires de plaques adjacentes en correspondance avec la position de fixation de chacun des supports de centrage (22).

9. Structure de support selon la revendication 8, **caractérisée en ce que**, en coordination avec la disposition des supports de centrage (22), il est prévu une répartition le long de l'arbre de support (18) d'une première pluralité de paires de plaques de support et d'une deuxième pluralité de plaques de support dans une position diamétralement opposée sur l'arbre de support (18).

10. Structure de support selon l'une quelconque des revendications précédentes, **caractérisée en ce que**, en plus de l'arbre de support (18), elle ne fournit que les supports de centrage (22) disposés en travers de l'arbre de support (18), divisés de telle manière qu'il y a deux paires de supports de centrage pour chaque rangée (24) de miroirs (12) disposés transversalement au deuxième axe (Y).

11. Structure de support selon l'une quelconque des revendications précédentes, comprenant des bras de support (20) du type articulé qui s'étendent radialement depuis l'arbre de support (18), au moyen desquels ledit élément récepteur est supporté, **caractérisée en ce que** chacun desdits bras de support (20) comprend un élément de fixation abouté (51) permettant la connexion avec l'arbre de support (18), qui a des faces pivotantes (71) ayant des surfaces usinées de manière coordonnée au moins avec lesdites premières faces de support (36) et lesdites deuxièmes faces de support (40), pour garantir un positionnement correct de l'élément récepteur le long dudit premier axe (X) et coordonné avec le positionnement desdits supports de centrage (22).

12. Structure de support selon la revendication 11, **caractérisée en ce que** l'élément de fixation abouté (51) comporte des trous de pivotement (72) pour un élément pivotant (66), lesdits trous de pivotement (72) étant percés avec une forme coordonnée à celle desdites faces pivotantes (71), de sorte que les axes de pivotement respectifs sont correctement positionnés par rapport auxdites faces pivotantes (71).

13. Structure de support selon l'une quelconque des revendications précédentes, **caractérisée en ce qu'**elle comprend des brides latérales (28) placées aux extrémités de l'arbre de support (18) pour permettre la connexion à des éléments à mouvement rotatif autour dudit deuxième axe (Y), chacune desdites brides latérales (28) comportant des premiers trous de brochage (27) permettant la connexion auxdits éléments à mouvement rotatif et des deuxièmes trous de brochage (29) permettant la connexion, directe ou indirecte, audit arbre de support (18), lesdits premiers trous de brochage (27) et deuxièmes trous de brochage (29) étant disposés mutuellement et formés en une étape coordonnée les uns avec les autres, afin de réduire ou d'éliminer le déphasage angulaire entre la tête et la queue de l'installation (14).

14. Structure de support selon l'une quelconque des revendications précédentes, **caractérisée en ce qu'**au moins lesdites premières faces de support (36) et lesdites deuxièmes faces de support (40) sont plates.

15. Installation solaire parabolique-linéaire du type à concentration comprenant une structure de support (10) selon l'une quelconque des revendications précédentes.

16. Procédé de production d'une structure de support (10) utilisable dans une installation solaire parabolique-linéaire (14) du type à concentration, pour supporter des miroirs (12) ayant une surface courbée, qui captent les rayons du soleil et les dirigent vers un élément récepteur pour produire de l'énergie, comme un tube récepteur (16) dans lequel circule un fluide d'échange de chaleur et/ou des cellules photovoltaïques du type à concentration, l'élément récepteur étant disposé le long d'un premier axe (X) d'alignement substantiel des foyers desdits miroirs (12), ledit procédé prévoyant de fournir un arbre de support (18) qui se développe parallèlement à un deuxième axe de rotation (Y) parallèle audit premier axe (X), et de monter des supports de centrage (22) pour supporter les miroirs (12) le long dudit arbre de support (18), disposés transversalement sur des côtés opposés par rapport audit arbre de support (18) d'une manière coordonnée avec la position desdits miroirs (12), en les accouplant avec des extrémités pivotantes respectives (26) audit arbre de support (18), **caractérisé en ce qu'**il prévoit :
- de disposer des premiers blocs de positionnement (34) le long de l'arbre de support (18) d'une manière coordonnée avec la disposition des supports de centrage (22), et de former, sur lesdits premiers blocs de positionnement (34), des premières faces de support (36) au moyen d'un processus d'enlèvement de matière à haute précision, tournées vers les supports de centrage (22) ;
- de disposer des deuxièmes blocs de positionnement (38) sur lesdites extrémités pivotantes (26) des supports de centrage (22), de former des deuxièmes faces de support (40) au moyen d'un processus d'enlèvement de matière à haute précision sur lesdits deuxièmes blocs de positionnement (38), adaptées pour coopérer en butée avec lesdites premières faces de support (36) et tournées vers l'arbre de support (18), et d'attacher entre eux lesdits premiers blocs de positionnement (34) et lesdits deuxièmes blocs de positionnement (38) ;
lesdits processus d'enlèvement de matière des premières faces de support (36) et des deuxièmes faces de support (40) étant réalisés de façon à définir des formes mutuellement coordonnées, afin de garantir le positionnement précis des supports de centrage (22) par rapport à l'arbre de support (18), de sorte que les miroirs (12) supportés par les supports de centrage (22) sont correctement orientés avec leurs foyers alignés le long dudit premier axe (X).

17. Procédé selon la revendication 16, **caractérisé en ce qu'**il prévoit de disposer des éléments de support (42) pour lesdits miroirs (12) le long de chacun desdits supports de centrage (22), répartis du centre vers la périphérie, et de former sur lesdits éléments de support (42), au moyen d'un processus d'enlèvement de matière à haute précision, des surfaces de support (43) dont la forme est coordonnée à la surface courbée des miroirs (12) et aux faces de support (40) des deuxièmes blocs de positionnement (38).

18. Procédé selon la revendication 16 ou 17, **caractérisé en ce que** les composants de la structure de support (10), comprenant au moins lesdites premières (36) et deuxièmes (40) faces de support des premiers (34) et deuxièmes (38) blocs de positionnement, sont soumis à un processus chimique pour les protéger de l'oxydation, et ne sont soumis que plus tard auxdits processus d'enlèvement de matière afin d'obtenir la référence de précision souhaitée de la position d'ensemble.

19. Procédé selon la revendication 16, 17 ou 18, qui prévoit de disposer des bras de support (20) du type articulé qui s'étendent radialement depuis l'arbre de support (18), au moyen desquels ledit élément récepteur est supporté, en connectant chacun desdits bras de support (20) à l'arbre de support (18) au moyen d'un élément de fixation abouté respectif (51), **caractérisé en ce qu'**il forme chaque élément de fixation abouté (51) avec des faces pivotantes (71) ayant des surfaces qui sont usinées de manière coordonnée au moins avec lesdites premières faces de support (36) et lesdites deuxièmes faces de support (40), afin de garantir un positionnement correct de l'élément récepteur le long dudit premier axe (X) et coordonné avec le positionnement desdits supports de centrage (22).

20. Procédé selon la revendication 19, **caractérisé en ce que**, grâce à un perçage, il forme des trous de pivotement (72) de l'élément de fixation abouté (51) dans lesquels est inséré un élément pivotant (66), les trous de pivotement (72) étant percés avec une forme coordonnée à celle desdites faces pivotantes (71), de sorte que les axes de pivotement respectifs sont correctement positionnés par rapport auxdites faces pivotantes (71).

21. Procédé selon l'une quelconque des revendications 16 à 20, qui prévoit de disposer des brides latérales (28) aux extrémités de l'arbre de support (18) pour permettre la connexion à des éléments à mouvement rotatif autour dudit deuxième axe (Y), **caractérisé en ce qu'**il forme des premiers trous de brochage (27) permettant la connexion auxdits éléments à mouvement rotatif et des deuxièmes trous de brochage (29) permettant la connexion, directe ou indirecte, audit arbre de support (18), lesdits premiers trous de brochage (27) et deuxièmes trous de brochage (29) étant disposés mutuellement et formés en une étape coordonnée les uns avec les autres, afin de réduire ou d'éliminer le déphasage angulaire entre la tête et la queue de l'installation (14).
